# EUROPÄISCHE PATENTANMELDUNG

(11) **EP 1 286 558 A1**
(43) Veröffentlichungstag der Anmeldung: **26.02.2003**
(21) Anmeldenummer: 01440270.5
(22) Anmeldetag: 20.08.2001
(51) Int. Cl.: H04Q 7/22

(54) **Mobilfunknetz und -endgerät für ortsabhängige Dienste**

(71) Anmelder: ALCATEL, 75008 Paris (FR)
(72) Erfinder: Nikolai, Dirk Dr.-Ing, 70439 Stuttgart (DE); Tangemann, Michael Dr.-Ing., 71229 Leonberg (DE)
(74) Vertreter: Rausch, Gabriele, Dr.

(57) **Zusammenfassung**

Die Erfindung betrifft ein Mobilfunknetz, das ortsabhängige Dienste (im Englischen sog. "location based services") für mobile Teilnehmer zur Verfügung stellt. Um die Nutzung von ortsabhängigen Diensten innerhalb eines Mobilfunknetzes zu vereinfachen, wird vorgeschlagen, dass die Netzelemente (RNC, SRV) des Mobilfunknetzes (MRN) veranlassen, dass zumindest eine der Funkfeststation (NB1 bis NB3) ein Indikatorsignal (LOC) aussendet, das angibt, dass mindestens ein ortsabhängiger Dienst verfügbar ist, um den mobilen Teilnehmern die Verfügbarkeit des ortsabhängigen Dienstes anzuzeigen. Das hier vorgeschlagene Mobilfunkendgerät MS empfängt das Indikatorsignal (LOC), und veranlasst, dass seine Anzeigesteuerung und das damit verbundene Anzeigefeld (Display) ein neues Symbol auf dem Anzeigefeld erzeugen, das dem mobilen Teilnehmer die Verfügbarkeit des ortsabhängigen Dienstes anzeigt.

## Beschreibung

Die Erfindung betrifft ein Mobilfunknetz, das ortsabhängige Dienste für mobile Teilnehmer zur Verfügung stellt, gemäß dem Oberbegriff des Anspruchs 1.

Außerdem betrifft die Erfindung ein Mobilfunkendgerät für einen mobilen Teilnehmer zur Nutzung von ortsabhängigen Diensten sowie ein Symbol und dessen Verwendung zur Anzeige auf einem Anzeigefeld des Mobilfunkendgeräts gemäß einem der nebengeordneten Ansprüche.

Aus der Patentschrift US 6,131,028 sind ein Mobilfunksystem und ein Mobilfunkendgerät bekannt, die einem Teilnehmer die Nutzung eines ortsabhängigen Dienstes ermöglichen. Wie dort in Spalte 1, Zeilen 57 bis 63 beschrieben ist, werden u.a. ortsabhängige Rufumleitungsdienste ("location-based call forwarding services") bereitgestellt. In Spalte 3, Zeilen 11 bis 21 ist beschrieben, dass dazu der Teilnehmer an der Tastatur seines Mobilfunkendgerätes ("wireless unit") eine Kennung ("feature code") eingeben muss und anschließend Festnetz-Telefonnummern, zu denen eingehende Mobilfunkrufe weitergeleitet werden sollen, falls der Teilnehmer sich in der Nähe der entsprechenden Festnetz-Telefone befindet. Das Mobilfunknetz, das ständig feststellt, wo sich der Teilnehmer momentan aufhält, kann dann ggfs. eine solche Rufumleitung zu einem der gewünschten Festnetz-Telefone schalten. Jedoch muss der Teilnehmer von sich aus durch Senden der Kennung ("feature code") beim Mobilfunknetz anzeigen, dass er den ortsabhängigen Rufumleitungsdienst nutzen möchte. Das gilt auch für die anderen dort (s. Spalte 1, Zeilen 59 bis 63 und Spalte 4, Zeilen 53 bis 65) angesprochenen ortsabhängigen Dienste, wie etwa für Informationsdienste für Teilnehmer, die auf Geschäftsreise sind.

Aufgabe der Erfindung ist es die Nutzung von ortsabhängigen Diensten innerhalb eines Mobilfunknetzes zu vereinfachen.

Gelöst wird die Aufgabe durch ein Mobilfunknetz mit den Merkmalen des Anspruchs 1, und durch ein Mobilfunkendgerät mit den Merkmalen des Anspruchs 5.

Außerdem wird zur Lösung der Aufgabe ein Symbol und dessen Verwendung zur Anzeige auf dem Anzeigefeld des Mobilfunkendgeräts gemäß den nebengeordneten Ansprüchen 8 bzw. 10 vorgeschlagen.

Demnach hat das erfindungsgemäße Mobilfunknetz mindestens eine Funkfeststation, die in Funkverbindung steht mit einem erfindungsgemäßen Mobilfunkendgerät, das der mobilen Teilnehmer benutzt, und hat Netzelemente, die den momentanen Aufenthaltsort des mobilen Teilnehmers schätzen und die ortsabhängigen Dienste bereitstellen, wobei die Netzelemente veranlassen, dass zumindest eine der mindestens einen Funkfeststation ein Indikatorsignal aussendet, das angibt, dass mindestens ein ortsabhängiger Dienst verfügbar ist, um den mobilen Teilnehmern die Verfügbarkeit des ortsabhängigen Dienstes anzuzeigen.

Das vorgeschlagene Mobilfunkendgerät hat einen Empfänger, der Funksignale von dem Mobilfunknetz empfängt, und eine damit verbundene Anzeigesteuerung und eine damit verbundenes Anzeigefeld, die mittels Videodaten, die die empfangenen Funksignale enthalten, Bilder auf dem Anzeigefeld erzeugen. Der Empfänger ist dazu geeignet, dass er von dem Mobilfunknetz ein Indikatorsignal empfängt, das angibt, dass ein ortsabhängiger Dienst verfügbar ist, wobei dann die Anzeigesteuerung und das Anzeigefeld ein Symbol auf dem Anzeigefeld erzeugen, das dem mobilen Teilnehmer die Verfügbarkeit des ortsabhängigen Dienstes anzeigt.

Dementsprechend wird auch ein Symbol und dessen Verwendung vorgeschlagen, das zur Anzeige auf dem Anzeigefeld des Mobilfunkendgerät gebracht wird, wobei das Symbol dem Teilnehmer die Verfügbarkeit eines ortsabhängigen Dienstes anzeigt, den das Mobilfunknetz bereitstellt.

Diese erfindungsgemäßen Maßnahmen haben den Vorteil, dass den mobilen Teilnehmern automatisch die Verfügbarkeit von ortsabhängigen Diensten angezeigt wird, sobald die Teilnehmer sich im einem Versorgungsbereich des Mobilfunknetzes befinden, wo solche Dienste angeboten werden. Die Teilnehmer müssen nicht erst von sich aus durch Senden von Anfragesignalen beim Mobilfunknetz abfragen, ob solche Dienste bereitgestellt werden. Deshalb kann auch auf die üblicherweise dafür benötigte Signalisierung verzichtet werden, was wiederum zu einer Reduktion der Signalisierungslast im Mobilfunknetz führt. Jeder Teilnehmer, der ein erfindungsgemäßes Mobilfunkendgerät benutzt, kann auf Anhieb feststellen, ob das Mobilfunknetz ortsabhängige Dienste an dem momentanen Aufenthaltsort anbietet. Die optische Anzeige durch ein Symbol ist sehr schnell sowie einfach vom Teilnehmer zu erfassen und diskret gegenüber der Umgebung des Teilnehmers.

Besonders vorteilhafte Ausgestaltungen ergeben sich aus den Unteransprüchen:
Demnach ist es von besonderem Vorteil, wenn das von dem Empfänger des Mobilfunkendgeräts empfangene Indikatorsignal auch angibt, mit welcher Güte der ortsabhängige Dienst verfügbar ist, und wenn die Anzeigesteuerung und das Anzeigefeld die Form, Intensität und/oder Farbe des Symbols in Abhängigkeit der angegebenen Güte verändern. Dadurch wird für den Teilnehmer sofort erkennbar, ob eine hinreichend große Genauigkeit hinsichtlich der Lokalisierung gegeben ist, um entsprechend hochwertige Dienste nutzen zu können. Beispielsweise gibt die höchste Genauigkeitsstufe an, dass die Lokalisierung bis auf wenige Meter genau geschätzt werden kann, was wiederum notwendig ist, wenn Teilnehmer Orientierungs- und Wegbeschreibungsdienste für Fußgänger in Innenstadtbereichen nutzen wollen. Außerdem erfasst jeder Teilnehmer durch Beobachtung des Symbols auf seinem Mobilfunkendgerät auch, ob die Güte des ortsabhängigen Dienstes stark schwankt. Der Teilnehmer kann dann ggfs. entscheiden, ob er bestimmte Dienste, die eine hohe Genauigkeit erfordern, beim Mobilfunknetz anfordert oder nicht. Die vorzugsweise von den Netzelementen ermittelte Güte kann abhängig sein von dem verwendeten Verfahren. Beispielsweise erzielen ein Triangulationsverfahren oder eine Koppelpeilung eine höhere Genauigkeit als die Ortung der Mobilstation mittels Auswertung der Funkzellen-Kennung. Das Indikatorsignal gibt dann vorzugsweise eine entsprechende Qualitätsstufe an. Die ermittelte Güte kann auch abhängig sein von der absolut erreichten Genauigkeit. Beispielswiese wird mittels eines Triangulationsverfahrens eine Genauigkeit der Ortung im Bereich von 200 - 20 Metern erreicht. Das Indikatorsignal gibt dann vorzugsweise die erreichte Genauigkeit als absoluten Wert in Metern an. Das Symbol kann z.B. ein entsprechend dargestellter Balken auf einer Skala vom 20 bis 200 sein.

Auch ist es besonders vorteilhaft, wenn das Mobilfunkendgerät mit einem Navigationsgerät verbindbar ist oder wenn es ein Navigationsmodul enthält, das den momentanen Aufenthaltsort bestimmt und das abhängig von der Genauigkeit, mit der das Navigationsgerät bzw. das Navigationsmodul den momentanen Aufenthaltsort bestimmt, ein Maß für die Güte des ortsabhängigen Dienstes angibt, wobei die Anzeigesteuerung und das Anzeigefeld die Form, Intensität und/oder Farbe des Symbols in Abhängigkeit der angegebenen Güte verändern. Durch diese besonderen Maßnahmen wird eine hohe Güte der Lokalisierung im Mobilfunkendgerät erreicht, ohne dass das Mobilfunknetz selbst den Aufenthaltsort des Teilnehmers schätzen muss.

Das Symbol selbst muss nicht zwingend ein optisch darstellbares Symbol sein. Denkbar ist auch eine akustische Anzeige in Form von bestimmten Signaltönen. Auch ein Vibrationsalarm mit einem bestimmten Muster kann den Teilnehmer auf das Vorhandensein von ortsabhängigen Diensten hinweisen.

Die Erfindung und die sich daraus ergebenden Vorteile werden nun anhand von Ausführungsbeispielen näher beschrieben, wobei auf die folgenden Zeichnungen (schematische Darstellungen) Bezug genommen wird:
- Fig.: 1 zeigt ein erfindungsgemäßes Mobilfunknetz;
- Fig. 2: zeigt einen Versorgungsbereich mit mehreren Funkzellen;
- Fig. 3: zeigt den Aufbau eines erfindungsgemäßen Mobilfunkendgerätes;
- Fig. 4: zeigt die Frontansicht des Mobilfunkendgerätes; und
- Fig. 5: zeigt verschiedene Darstellungen von erfindungsgemäßen Symbolen.

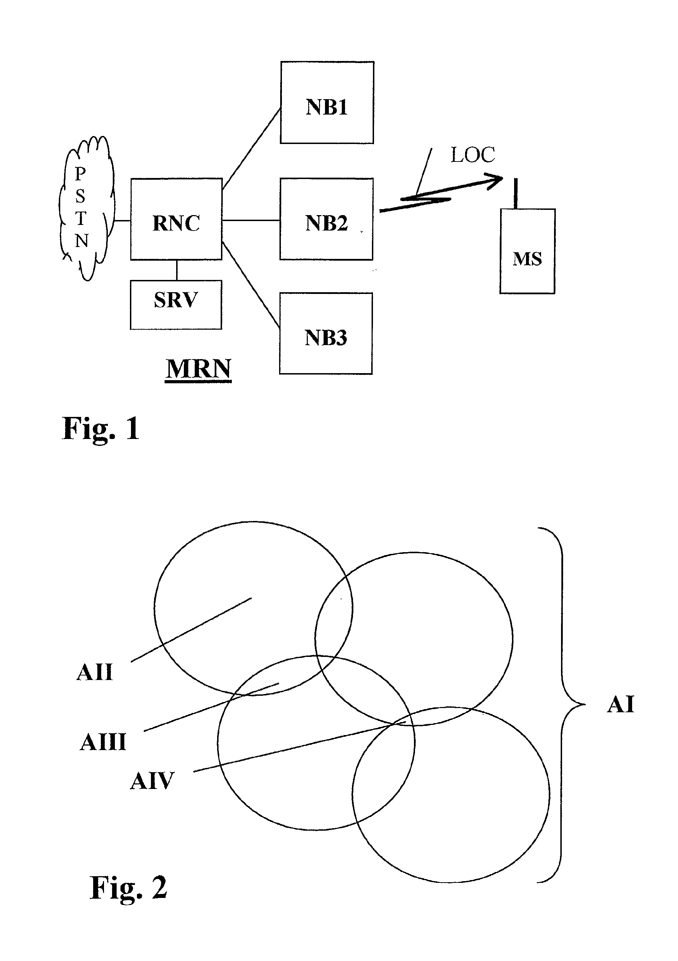

Die Figur 1 zeigt schematisch den Aufbau eines Mobilfunknetzes MRN, das ortsabhängige Dienste für mobile Teilnehmer zur Verfügung stellt durch Benutzung von Mobilfunkendgeräten, die mit dem Mobilfunknetz MRN in Funkverbindung stehen. Beispielhaft ist in Figur 1 ein Mobilfunkendgerät MS dargestellt. Das Mobilfunknetz MRN enthält mehrere Funkfeststationen NB1, NB2 und NB3, die mit Netzelementen, insbesondere mit einer Funknetzsteuerung RNC verbunden sind. Diese wiederum stellt Verbindungen zu einem öffentlichen Telekommunikationsnetz PSTN her. Die Funknetzsteuerung RNC ist mit einem weiteren Netzelement, nämlich mit einem Diensterechner SRV verbunden, der die ortsabhängigen Dienste innerhalb des Mobilfunknetzes MRN bereitstellt.

Es werden beispielsweise folgende ortsabhängige Dienste bereitgestellt:
Informationsdienste für Reisende und Touristen, Navigationsdienste, Fremdenführerdienste, Wareninformations- und Einkaufsdienste, Wettervorhersagedienste, Notfallinformationsdienste und dergleichen mehr. Je nachdem, an welchem Aufenthaltsort sich der Teilnehmer momentan befindet, werden dafür geeignete Dienste angeboten. Befindet sich der Teilnehmer beispielsweise im Zentrum einer größeren Stadt, so werden Informations- und Fremdenführerdienste, als auch Wareninformations- und Einkaufsdienste angeboten. Dabei kann in Abhängigkeit vom konkreten Aufenthaltsort das Diensteangebot variiert werden. Das Mobilfunknetz MRN überwacht dazu ständig den Aufenthaltsort des Teilnehmers und passt mittels des Diensteservers SRV das Angebot der ortsabhängigen Dienste entsprechend an. Die Angebotspalette der ortsabhängigen Dienste hängt nicht nur vom konkreten Aufenthaltsort des Teilnehmers ab, sondern auch von der Lage des Versorgungsbereichs, der aus einer oder mehreren Funkzellen bestehen kann. Befindet sich beispielsweise der Teilnehmer innerhalb einer von mehreren Funkzellen, die eine Großstadt versorgen, so werden dem Teilnehmer Dienste angeboten, die für den gesamten Versorgungsbereich der Großstadt gelten. Dies sind zum Beispiel regionale Dienste wie Information über Kulturveranstaltungen, regionale Wettervorhersage, lokale Verkehrsfunkinformationen und so weiter. Außerdem wird auf Grund der genauen Lokalisierung des Teilnehmers, beispielsweise der Straße in der er sich befindet, entsprechende Dienste angeboten, wie beispielsweise Werbung und Information von dort ansässigen Geschäften, Tourismusinformation über Sehenswürdigkeiten vor Ort und so weiter.

Es wird hier vorgeschlagen, dass dem Teilnehmer, bevor er überhaupt einen ortsabhängigen Dienst in Anspruch nehmen will, bereits auf seinem Mobilfunkendgerät MS die Verfügbarkeit von solchen Diensten angezeigt wird, insbesondere auch die Qualität solcher Dienste. Dazu sendet das Mobilfunknetz MRN ein Indikatorsignal LOC an die Mobilfunkendgeräte. Diese können dann durch den Empfang des Indikatorsignales LOC sofort feststellen, dass ortsabhängige Dienste angeboten werden. Erfindungsgemäß erscheint ein entsprechendes Symbol dann auf dem Anzeigefeld des jeweiligen Mobilfunkendgeräts MS. Das Aussenden und das Empfangen des Indikatorsignales LOC wird später noch näher beschrieben. Zunächst wird hier anhand der Figuren 1 und 2 beschrieben, wie das Mobilfunknetz MRN eine Lokalisierung von Teilnehmern durchführen kann:
In der Figur 2 sind mehrere benachbarte Funkzellen dargestellt, die von entsprechend vielen Funkfeststationen versorgt werden und die zusammen einen Versorgungsbereich Al bilden. Die Lokalisierung von Teilnehmern erfolgt hier durch das Mobilfunknetz MRN selbst, in dem die Netzelemente Funksignalmessungen ausführen, mittels denen festgestellt wird, in welcher der Funkzellen sich der mobile Teilnehmer aufhält. Diese Funktion wird im wesentlichen von der Funknetzsteuerung RNC (siehe Figur 1) durchgeführt. Damit kann eine Lokalisierung bereits in der Größenordnung einer einzelnen Funkzelle erfolgen, so wie es in der Figur 2 durch das Bezugszeichen All angedeutet ist. Funkzellen haben je nach Abmessung einen Durchmesser von mehreren Kilometern bis hinunter zu etwa einhundert Meter und manchmal auch weniger. Diese Genauigkeit der Lokalisierung reicht aus, um ortsabhängige Dienste, für entsprechend kleine Bereiche, wie beispielsweise Innenstadtbereiche, anzubieten.

Darüber hinaus kann aber das Mobilfunknetz auch eine genauere Lokalisierung durchführen, beispielsweise mittels eines Triangulationsverfahrens. Dabei werden Messwerte von den Funkfeststationen NB1 bis NB3 (siehe Figur 1) von der Funknetzsteuerung RNC ausgewertet. Diese Messwerte sind beispielsweise Funkempfangspegel oder Signallaufzeiten, die die Funkverbindungen zwischen der Mobilstation und den Funkfeststationen NB1, NB2 oder NB3 kennzeichnen. Die Messwerte bilden demnach ein Maß für die Abstände zwischen dem Mobilfunkendgerät und den einzelnen Funkfeststationen. Diese Abstände entsprechen Entfernungsradien, die von den Standorten der einzelnen Funkfeststationen ausgehen. Entsprechend gezogenen Kreisbögen bilden Schnittflächen, die dann den geschätzten Aufenthalt der Teilnehmerstation eingrenzen. Wie in Figur 2 dargestellt können entsprechende Flächen (siehe AIII oder AIV) von dem Mobilfunknetz berechnet werden, die in ihren Abmessungen wesentlich kleiner sind als eine einzelne Funkzelle. Somit kann der Standort des Teilnehmers bis auf wenige Meter genau bestimmt werden. Anhand dieser präziseren Lokalisierungen werden dann entsprechend hochgenaue ortsabhängige Dienste angeboten.

Es wird hier vorgeschlagen, mittels des Indikatorsignales LOC (s. Figur 1) auch die Genauigkeit der Lokalisierung dem Mobilfunkendgerät MS mitzuteilen, um es dort auf dem Anzeigefeld darzustellen. Der Teilnehmer ist dann nicht nur über die Verfügbarkeit eines ortsabhängigen Dienstes an sich informiert, sondern auch über die Güte des angebotenen Dienstes. Die Lokalisierung des Teilnehmers kann wie hier anhand der Figuren 1 und 2 beschrieben wird, durch das Mobilfunknetz MRN selbst ausgeführt werden. Ebenfalls kann die Lokalisierung auch durch das Mobilfunkendgerät MS ausgeführt werden, sofern es über entsprechende Navigationsmittel verfügt.

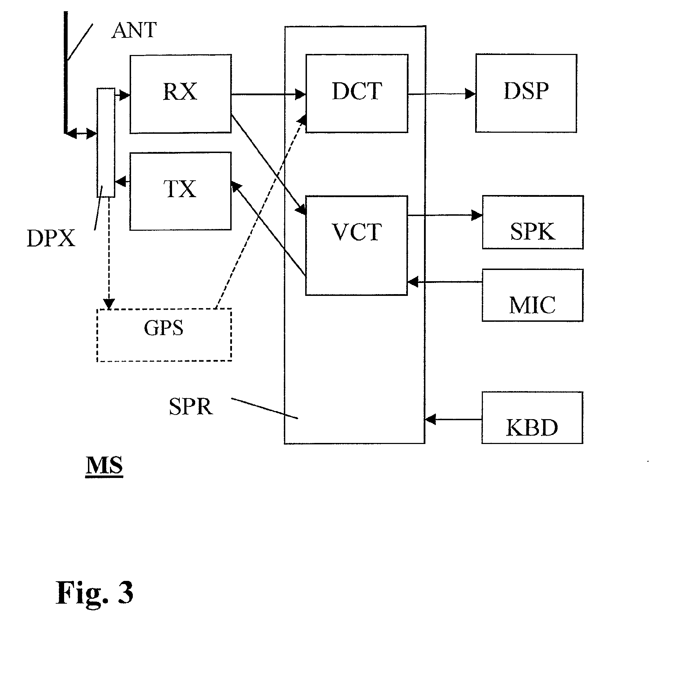

Die Figur 3 zeigt ein dafür ausgestattetes Mobilfunkendgerät MS, das über ein Navigationsmodul GPS verfügt, welches durch satellitengestützte Navigation auf wenige Meter genau die Position des Mobilfunkendgerätes MS bestimmen kann. An Stelle eines Navigationsmoduls GPS ist es auch denkbar, ein externes Navigationsgerät an das Mobilfunkendgerät MS anzuschließen. Der in der Figur 3 schematisch dargestellte Aufbau zeigt außerdem folgende Funktionselemente des Mobilfunkendgerätes MS:
Einen Empfänger RX und einen Sender TX, die beide über einen Duplexer DPX mit der Antenne ANT des Mobilfunkendgerätes MS verbunden sind. Sowohl der Empfänger RX als auch der Sender TX sind über eine digitale Signalverarbeitungseinheit SPR mit den Peripherieelementen des Mobilfunkendgerätes MS verbunden, die da sind: ein Anzeigefeld DSP, ein Lautsprecher SPK, ein Mikrofon MIC und eine Tastatur KBD. Die digitale Signalverarbeitungseinheit SPR enthält insbesondere eine Anzeigesteuerung DCT, die mit dem Empfänger RX und der Anzeige DSP verbunden ist und letztere steuert, sowie eine Sprachverarbeitungseinheit VCT, die den Empfänger RX und den Sender TX mit dem Sprachausgabemittel, das heißt mit dem Lautsprecher SPK, beziehungsweise dem Spracheingabemitte, das heißt mit dem Mikrofon MIC, verbinden. Das vorhin schon genannte Navigationsmodul GPS ist mit dem Duplexer DPX verbunden, um Signale von Navigationssatelliten über die Antenne ANT zu empfangen. Außerdem ist es mit der Anzeigesteuerung DCT verbunden, um diese mit Lokalisierungsdaten zu versorgen.

Die in Figur 3 dargestellten Funktionselemente, insbesondere der Empfänger RX, die Anzeigesteuerung DCT, das Anzeigefeld DSP und das Navigationsmodul GPS arbeiten wie folgt zusammen:

Empfängt das Mobilfunkendgerät MS über seine Antenne ANT und den Empfänger RX das vom Mobilfunknetz ausgesendete Indikatorsignal (LOC in Figur 1), so wird dieses an die Anzeigesteuerung DCT weitergegeben. Diese erzeugt daraufhin ein Symbol, das auf dem Anzeigefeld DSP dargestellt wird und das dem Teilnehmer anzeigt, dass ortsabhängige Dienste im Mobilfunknetz verfügbar sind. Außerdem erhält die Anzeigesteuerung von dem Navigationsmodul GPS Positionsdaten über den momentanen Aufenthaltsort des Teilnehmers oder zumindest Daten über die Genauigkeit der Positionsbestimmung.

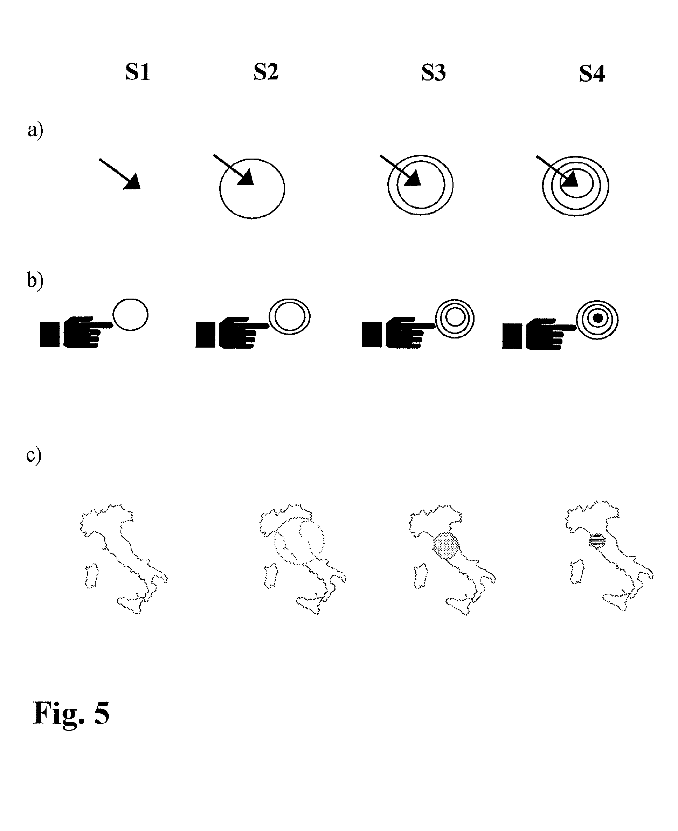

Auf Grund der Genauigkeit der Positionsbestimmung erzeugt die Anzeigesteuerung DCT eine Veränderung des auf dem Anzeigefeld DSP dargestellten Symbols, wodurch der Teilnehmer nicht nur über die Verfügbarkeit des ortsabhängigen Dienstes, sondern auch über die Güte dieses Dienstes informiert wird. Das Symbol wird entsprechend der Genauigkeit in seiner Darstellung, das heißt in seiner Form, Intensität und/oder Farbe verändert. Eine genaue Beschreibung dieses Vorgangs erfolgt noch anhand der Figur 5.

Das hier in der Figur 3 dargestellte Mobilfunkendgerät MS verfügt also über Navigationsmittel, nämlich über das Navigationsmodul GPS, mit dem es selbst die Positionsbestimmung durchführt. Alternativ dazu kann die Positionsbestimmung auch vom Mobilfunknetz aus erfolgen, wobei das Mobilfunknetz zusammen mit dem Indikatorsignal (LOC in Figur 1) die Genauigkeit der Positionsbestimmung dem Mobilfunkendgerät MS mitteilt. Diese Information wird dann in der Anzeigesteuerung DCT entsprechend verarbeitet und führt zu einer Änderung in der Darstellung des Symbols auf dem Anzeigefeld DSP. Auch in diesem Falle erhält der Teilnehmer sofort eine Auskunft nicht nur über die Anwesenheit von ortsabhängigen Diensten, sondern auch über die Güte dieser angebotenen Dienste.

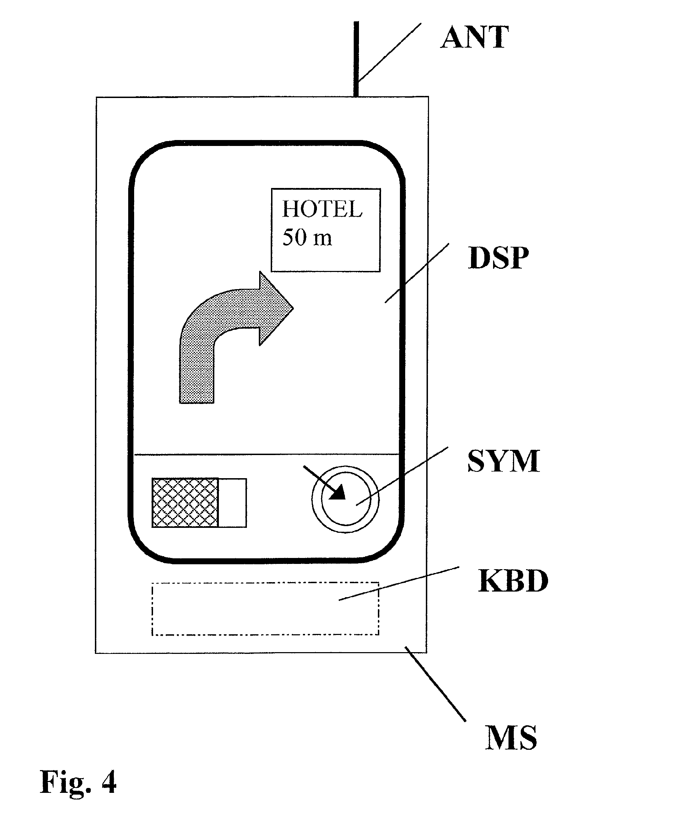

Die Figur 4 zeigt in der Frontansicht das Mobilfunkendgerät MS mit einer erfindungsgemäßen Symbol-Darstellungen auf der Anzeigevorrichtung DSP. In der Figur 4 sind folgende Elemente des Mobilfunkendgerätes MS schematisch dargestellt: die Antenne ANT, das Anzeigefeld DSP, das Tastaturfeld KBD und ein auf dem Anzeigefeld DSP dargestelltes Symbol SYM sowie andere Symbole und Darstellungen.

Es wird damit beispielhaft eine Situation gezeigt, bei der der Teilnehmer sich im Innenstadtbereich befindet und einen ortsabhängigen Dienst benutzt, der ihn zu einem gesuchten Objekt, beispielsweise zu einem Hotel führt. Der ortsabhängige Dienst zeigt auf dem Anzeigefeld DSP beispielsweise durch einen Rechtspfeil und durch Textangaben an, dass der Teilnehmer das gesuchte Hotel in einer Entfernung von 50 Meter vom jetzigen Standpunkt aus vorfindet, wenn der Teilnehmer rechts in die nächste Straße abbiegt. Außerdem ist auf dem Anzeigefeld DSP ein übliches Symbol, nämlich ein Symbol für den Batterieladezustand, dargestellt. Erfindungsgemäß wird nun auf dem Anzeigefeld DSP auch noch ein neues Symbol SYM dargestellt, das sowohl die Verfügbarkeit des ortsabhängigen Dienstes als auch die Qualität dieses Dienstes angibt. Beispielsweise wird die Verfügbarkeit durch die Präsenz eines symbolischen Pfeiles angezeigt und die Qualität durch die Anzahl mehrerer konzentrischer Ringe.

Diese und andere Darstellungsformen des Symboles sind in der Figur 5 dargestellt. In einem ersten Beispiel a) wird ein Symbolpfeil gewählt, um die Verfügbarkeit des ortsabhängigen Dienstes anzuzeigen. Außerdem werden konzentrische Kreise dargestellt, die entsprechend ihrer Anzahl die Qualität des Dienstes angeben. In der ersten Stufe S1 wird lediglich die Verfügbarkeit des Dienstes angezeigt, in den Stufen S2, S3, und S4 werden die unterschiedlichen Qualitäten angezeigt, wobei S2 die niedrigste und S4 die höchste Qualitätsstufe darstellt. Entsprechend hat die Darstellung für die Stufe S2 einen Ring, die Darstellung für die Stufe S3 zwei Ringe und die Darstellung für die Stufe S4 drei konzentrische Ringe. Der Teilnehmer erkennt also ohne Mühe und auf Anhieb, dass ein ortsabhängiger Dienst verfügbar ist und wie hoch die Qualität dieses Dienstes ist. Die Stufe S2 steht beispielsweise für eine Genauigkeit der Lokalisierung von etwa einem oder mehreren Kilometern, die Stufe S3 für eine Präzision von einhundert oder mehreren hundert Metern und die Stufe 4 für eine Präzision von wenigen Metern Genauigkeit.

Eine Variante der Darstellung zeigt das Beispiel b) nach Figur 5. Dort wird durch eine symbolische Hand die Präsenz des ortsabhängigen Dienstes angezeigt, wobei bereits ein erster Kreis hinzugefügt ist. Bei einer höheren Qualität entsprechend den Stufen S2 bis S4 werden weitere Kreise hinzugefügt. Schließlich zeigt das dritte Beispiel c) in der Figur 5 ein Symbol dass den geographischen Umriss eines Landes wiedergibt, um anzudeuten, dass ein ortsabhängiger Dienst per se verfügbar ist. Die Genauigkeit entsprechend den Stufen S2 bis S4 wird durch einen zusätzlichen Kreis dargestellt, der Teile des dargestellten Landes abdeckt umso enger, je höher die Genauigkeit ist. In diesem Beispiel ist der Umriss von Italien dargestellt; die Kreise engen die Region um Rom ein, entsprechend der Genauigkeitsstufen S2, S3 oder S4.

Mit der beschriebenen Erfindung werden mobile Teilnehmer automatisch und schon bevor sie einen mobilen Dienst in Anspruch nehmen wollen umfassend und schnell durch Anzeige auf dem Anzeigefeld (Display) über die Verfügbarkeit und Güte von ortsabhängigen Diensten informiert. Daher ist der Einsatz der Erfindung besonders interessant für mobile Teilnehmer, die häufig auf Reisen sind und Informationen an den verschiedenen Reiseorten benötigen. Auch ist es möglich, dass der Teilnehmer während er einen ortsabhängigen Dienst nutzt oder erst nachdem er ihn genutzt hat, über die Güte des Dienstes informiert wird mittels eines entsprechend dargestellten Symbols. Das hat den Vorteil, dass der Teilnehmer die Verlässlichkeit der ihm zugesendeten Nutzdaten und Informationen einschätzen kann. Die Übertragung des Indikatorsignals muss nicht zwingend permanent erfolgen; sie kann auch zeitweise und nur bei bestimmten Ereignissen erfolgen, z.B. beim Einschalten des Mobilfunkendgerätes, beim Funkzellenwechsel oder beim Wechsel zwischen Diensten, Applikationen und dergleichen. Die beschriebenen Beispiele betreffen besonders vorteilhafte Ausgestaltungen der Erfindung. Es sind jedoch noch weitere zahlreiche Ausführungsformen und Varianten der Erfindung denkbar.

In diesem Zusammenhang ist zu nennen, dass das Symbol selbst nicht zwingend ein optisch darstellbares Symbol sein muss. Denkbar ist auch eine akustische Anzeige in Form von bestimmten Signaltönen. Auch ein Vibrationsalarm mit bestimmten Muster kann den Teilnehmer auf das Vorhandensein von ortsabhängigen Diensten hinweisen. Beispielsweise fordert der Teilnehmer einen ortsabhängigen Dienst an. Dieser sei jedoch am momentanen Aufenthaltstort des Teilnehmers nicht verfügbar. Dann erhält der Teilnehmer ein spezielles akustisches Signal oder einen Vibrationsalarm, sobald er in einen Bereich kommt, wo der ortsabhängige Dienst von dem Mobilfunknetz angeboten wird. Die Nutzung dieser Alarmierung kann zusätzlich in Rechnung gestellt werden. Gleiches gilt auch an sich für die Übertragung des Indikatorsignals selbst.

## Patentansprüche

1. Mobilfunknetz (MRN), das ortsabhängige Dienste für mobile Teilnehmer zur Verfügung stellt, mit mindestens einer Funkfeststation (NB1, NB2, NB3), die in Funkverbindung steht mit mindestens einem Mobilfunkendgerät (MS), das einer der mobilen Teilnehmer benutzt, und mit Netzelementen (RNC, SRV), die den momentanen Aufenthaltsort des mobilen Teilnehmers schätzen und die ortsabhängigen Dienste bereitstellen,
**dadurch gekennzeichnet, dass**
die Netzelemente (RNC, SRV) veranlassen, dass die mindestens eine Funkfeststation (NB2) ein Indikatorsignal (LOC) aussendet, das angibt, dass mindestens ein ortsabhängiger Dienst verfügbar ist, um den mobilen Teilnehmern die Verfügbarkeit (S1) des ortsabhängigen Dienstes anzuzeigen.

2. Mobilfunknetz (MRN) nach Anspruch 1, **dadurch gekennzeichnet, dass** jede der Funkfeststationen (NB1, NB2, NB3) eine Funkzelle versorgt, dass die Netzelemente eine Funknetzsteuerung (RNC) umfassen, die die Funkfeststationen (NB1, NB2, NB3) steuert und die feststellt, in welcher der Funkzellen der mobile Teilnehmer sich aufhält, und dass die Netzelemente einen Diensterechner (SRV) umfassen, der für die Funkzellen verschiedene ortsabhängige Dienste bereitstellt.

3. Mobilfunknetz (MRN) nach Anspruch 1, **dadurch gekennzeichnet, dass** die Netzelemente (RNC, SRV) abhängig von dem verwendeten Verfahren und/oder von der Genauigkeit, mit der sie den momentanen Aufenthaltsort des mobilen Teilnehmers schätzen, ein Maß für die Güte (S2, S3, S4) des ortsabhängigen Dienstes bestimmen, und dass die mindestens eine Funkfeststation (NB2) das Indikatorsignal (LOC) so erzeugt und aussendet, dass das Indikatorsignal (LOC) auch anzeigt, mit welcher Güte (S2, S3, S4) der ortsabhängige Dienst verfügbar ist.

4. Mobilfunknetz (MRN) nach Anspruch 3, **dadurch gekennzeichnet, dass** die Netzelemente (RNC, SRV) Messwerte von den Funkfeststationen (NB1, NB2, NB3) mittels eines terrestrischen Navigationsverfahrens, insbesondere mittels eines Triangulationsverfahrens, auswerten und damit den momentanen Aufenthaltsort des mobilen Teilnehmers schätzen und damit auch das Maß für die Güte (S2, S3, S4) des ortsabhängigen Dienstes bestimmen.

5. Mobilfunkendgerät (MS) für einen mobilen Teilnehmer zur Nutzung von ortsabhängigen Diensten mit einem Empfänger (RX), der mindestens ein Funksignal von einem Mobilfunknetz (MRN) empfängt, mit einer mit dem Empfänger (RX) verbundenen Anzeigesteuerung (DCT) und mit einem damit verbundenen Anzeigefeld (DSP),
**dadurch gekennzeichnet, dass**
der Empfänger (RX) von dem Mobilfunknetz (MRN) ein Indikatorsignal (LOC) empfängt, das angibt, dass ein ortsabhängiger Dienst verfügbar ist, und dass dann die Anzeigesteuerung (DCT) und das Anzeigefeld (DSP) ein Symbol (SYM) auf dem Anzeigefeld (DSP) erzeugen, das dem mobilen Teilnehmer die Verfügbarkeit (S1) des ortsabhängigen Dienstes anzeigt.

6. Mobilfunkendgerät (MS) nach Anspruch 5, **dadurch gekennzeichnet, dass** das von dem Empfänger (RX) empfangene Indikatorsignal (LOC) auch angibt, mit welcher Güte (S2, S3, S4) der ortsabhängige Dienst verfügbar ist, und dass die Anzeigesteuerung (DCT) und das Anzeigefeld (DSP) die Form, Intensität und/oder Farbe des Symbols (SYM) in Abhängigkeit der angegebenen Güte (S2, S3, S4) verändern.

7. Mobilfunkendgerät nach Anspruch 5, **dadurch gekennzeichnet, dass**
das von dem Empfänger empfangene Funksignal Videodaten enthält, mittels denen die Anzeigesteuerung und mit einem damit verbundenen Anzeigefeld Bilder auf dem Anzeigefeld erzeugen, dass das empfangene Funksignal mit dem Indikatorsignal zusammengefasst ist zu einem Signal, das die Videodaten und Indikatordaten enthält, und dass die Anzeigesteuerung und mit einem damit verbundenen Anzeigefeld das Symbol, insbesondere in Form eines Einblend-Fensters, innerhalb der Bilder auf dem Anzeigefeld erzeugen.

8. Mobilfunkendgerät (MS) nach Anspruch 5, **dadurch gekennzeichnet, dass** das Mobilfunkendgerät (MS) mit einem Navigationsgerät verbindbar ist oder ein Navigationsmodul (GPS) enthält, das den momentanen Aufenthaltsort bestimmt und das abhängig von der Genauigkeit, mit der das Navigationsgerät bzw. das Navigationsmodul (GPS) den momentanen Aufenthaltsort bestimmt, ein Maß für die Güte (S2, S3, S4) des ortsabhängigen Dienstes angibt, und dass die Anzeigesteuerung (DCT) und das Anzeigefeld (DSP) die Form, Intensität und/oder Farbe des Symbols (SYM) in Abhängigkeit der angegebenen Güte (S2, S3, S4) verändern.

9. Symbol (SYM) zur Anzeige auf einem Anzeigefeld (DSP) eines Mobilfunkendgerät (MS), das ein mobiler Teilnehmer im Versorgungsbereich eines Mobilfunknetzes (MRN) benutzt,
**dadurch gekennzeichnet, dass**
das Symbol (SYM) dem Teilnehmer die Verfügbarkeit (S1) eines ortsabhängigen Dienstes anzeigt, den das Mobilfunknetz (MRN) bereitstellt.

10. Symbol (SYM) nach Anspruch 8, **dadurch gekennzeichnet, dass**
das Symbol (SYM) durch Änderung seiner Form, Intensität und/oder Farbe anzeigt, mit welcher Güte (S2, S3, S4) der ortsabhängige Dienst verfügbar ist.

11. Verwendung eines Symbols (SYM) zur Anzeige auf einem Anzeigefeld (DSP) eines Mobilfunkendgerät (MS), das ein mobiler Teilnehmer im Versorgungsbereich eines Mobilfunknetzes (MRN) benutzt,
**dadurch gekennzeichnet, dass**
das Symbol (SYM) dem Teilnehmer die Verfügbarkeit (S1) eines ortsabhängigen Dienstes anzeigt, den das Mobilfunknetz (MRN) bereitstellt.
